(19) Europäisches Patentamt

European Patent Office

Office européen des brevets

(11) **EP 4 178 298 B1**

(12) # EUROPEAN PATENT SPECIFICATION

(45) Date of publication and mention
of the grant of the patent:
**12.03.2025 Bulletin 2025/11**

(21) Application number: **21854113.4**

(22) Date of filing: **30.07.2021**

(51) International Patent Classification (IPC):
**H04W 72/04** (2023.01)   **H04L 5/00** (2006.01)
**H04W 72/232** (2023.01)

(52) Cooperative Patent Classification (CPC):
**H04L 5/0053; H04L 5/0091; H04L 5/0094;
H04W 72/232**

(86) International application number:
**PCT/CN2021/109840**

(87) International publication number:
**WO 2022/028335 (10.02.2022 Gazette 2022/06)**

(54) **CONTROL CHANNEL TRANSMISSION METHOD, APPARATUS, RELATED DEVICE, AND STORAGE MEDIUM**

**STEUERKANALÜBERTRAGUNGSVERFAHREN, VORRICHTUNG, ZUGEHÖRIGE VORRICHTUNG UND SPEICHERMEDIUM**

**PROCÉDÉ DE TRANSMISSION DE CANAL DE COMMANDE, APPAREIL, DISPOSITIF ASSOCIÉ ET SUPPORT DE STOCKAGE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2020 CN 202010790030**

(43) Date of publication of application:
**10.05.2023 Bulletin 2023/19**

(73) Proprietors:
• **China Mobile Communication Co., Ltd Research Institute**
**Beijing 100053 (CN)**
• **CHINA MOBILE COMMUNICATIONS GROUP CO., LTD.**
**Beijing 100032 (CN)**

(72) Inventors:
• **LI, Yan**
**Beijing 100053 (CN)**
• **WANG, Fei**
**Beijing 100053 (CN)**
• **ZHENG, Yi**
**Beijing 100053 (CN)**
• **LIU, Jianjun**
**Beijing 100053 (CN)**

(74) Representative: **Novagraaf Technologies
Bâtiment O2
2, rue Sarah Bernhardt
CS90017
92665 Asnières-sur-Seine Cedex (FR)**

(56) References cited:
**EP-A1- 3 634 057       CN-A- 108 401 294
CN-A- 110 972 283      CN-A- 110 972 283
US-A1- 2019 158 317    US-A1- 2020 021 474
US-A1- 2021 218 526**

• **NTT DOCOMO, INC.: "PDCCH enhancements for URLLC", 3GPP DRAFT; R1-1813324 PDCCH ENHANCEMENTS FOR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, US; 20181112 - 20181116, 11 November 2018 (2018-11-11), Mobile Competence Centre ; 650, route des Lucioles ; F-06921 Sophia-Antipolis Cedex ; France , XP051555351**

**(Cont. next page)**

- **LG ELECTRONICS: "Discussion on PDCCH repetition for URLLC", 3GPP DRAFT; R1-1804571 DISCUSSION ON PDCCH REPETITION FOR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sanya, China; 20180416 - 20180420, 15 April 2018 (2018-04-15), Mobile Competence Centre ; 650, route des Lucioles ; F-06921 Sophia-Antipolis Cedex ; France , XP051426840**

**Description**

TECHNICAL FIELD

The present application relates to the field of wireless communication, and in particular to a control channel transmission method, an apparatus, a related device, and a storage medium.

BACKGROUND

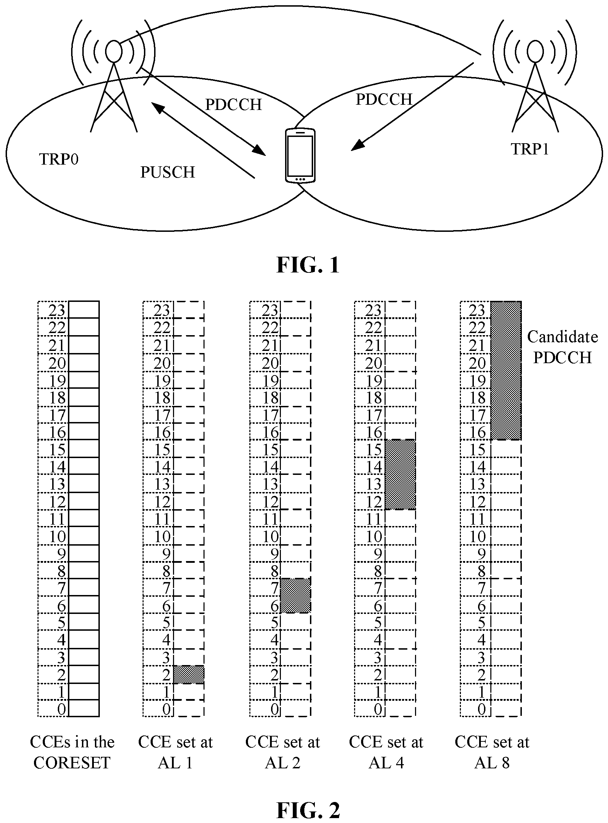

In a New Radio (NR) system, transmission configuration of a Physical Downlink Control Channel (PDCCH) is more flexible than that of a Long Term Evolution (LTE) system. A Control Resource Set (CORESET) and a control channel Search Space set are introduced in the NR system. The CORESET is configured to define a frequency domain resource location of the PDCCH, and the Search Space set is configured to define time domain location information of the PDCCH.
In order to improve reliability of PDCCH transmission, as illustrated in FIG. 1, the PDCCH is sent by using multiple Transmission and Reception Points (TRPs) (i.e. multiple TRPs).
However, how to send the PDCCH by using multiple TRPs is an urgent problem to be solved at present. Related technologies can be found at least in US2020/021474A1 and CN110972283.

SUMMARY

In order to solve the related technical problems, embodiments of the present disclosure provide a control channel transmission method, an apparatus, a related device, and a storage medium.
The invention is set out in the appended set of claims.
According to the control channel transmission method, the apparatus, the related device, and the storage medium provided by the embodiments of the present disclosure, the network device sends at least two candidate control channels, and there is a first corresponding link between information related to a first candidate control channel of the at least two candidate control channels and information related to other candidate control channels of the at least two candidate control channels except for the first candidate control channel. The UE receives the at least two candidate control channels. Since the link is established between multiple candidate control channels, the UE side is aware of which candidate control channels should be combined, so that a PDCCH is sent by using multiple TRPs.

BRIEF DESCRIPTION OF THE DRAWINGS

FIG. 1 is a diagram of sending one PDCCH through two TRPs.
FIG. 2 is a diagram of a number of CCEs corresponding to different ALs according to an embodiment of the present disclosure.
FIG. 3A is a diagram of CCE locations of two candidate control channels according to an embodiment of the present disclosure.
FIG. 3B is another diagram of CCE locations of two candidate control channels according to an embodiment of the present disclosure.
FIG. 4 is a diagram of CCE locations of two candidate control channels in different Search Space sets according to an embodiment of the present disclosure.
FIG. 5 is a flowchart of a control channel transmission method according to an embodiment of the present disclosure.
FIG. 6 is a flowchart of another control channel transmission method according to an embodiment of the present disclosure.
FIG. 7 is a structural diagram of a control channel transmission apparatus according to an embodiment of the present disclosure.
FIG. 8 is a structural diagram of another control channel transmission apparatus according to an embodiment of the present disclosure.
FIG. 9 is a structural diagram of a network device according to an embodiment of the present disclosure.
FIG. 10 is a structural diagram of a UE according to an embodiment of the present disclosure.
FIG. 11 is a structural diagram of a control channel transmission system according to an embodiment of the present disclosure.

DETAILED DESCRIPTION

The present application is further described in detail below in combination with the embodiments.

Before describing the embodiments of the present disclosure, the following terms are explained.

1. A CCE is a basic unit of a PDCCH, and one CCE occupies six Resource Element Groups (REGs) (i.e. 72 Resource Elements (REs)) on a frequency domain. That is, each CCE is composed of six REGs.

2. An AL is a number of CCEs constituting one PDCCH, typically AL=1, 2, 4, 8, 16 (FIG. 2 illustrates a PDCCH with 1, 2, 4 and 8 ALs).

3. For a Search Space set, UE performs blind detection on all candidate PDCCHs in the Search Space set for all the candidate PDCCH in a candidate PDCCH set with the ALs allowed to be used by the Search Space set.

4. A total number nrofCandidates of the candidate PDCCHs corresponding to each AL is configured in the Search Space set.

A CCE index of each candidate PDCCH in a CORESET can be determined according to a hash function. That is, the CCE index is determined through the following equation:

$$ L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor N_{CCE,p}/L \right\rfloor \right\} + i \qquad (1) $$

For a common Search Space set, $Y_{p,n_{s,f}^{\mu}} = 0$. For a specific Search Space set of UE, $Y_{p,n_{s,f}^{\mu}} = \left( A_p \cdot Y_{p,n_{s,f}^{\mu}-1} \right) \bmod D$, $Y_{p,-1} = n_{RNTI} \neq 0$. A value of $A_p$ is related to a remainder after modulo 3 of a subscript $p$ thereof. If $p \bmod 3 = 0$, $A_p = 39\,827$. If $p \bmod 3 = 1$, $A_p = 39\,829$. If $p \bmod 3 = 2$, $A_p = 39\,839$, $D = 65\,537$ and $i = 0, \cdots, L-1$. If the UE is configured with a CIF, $n_{CI}$ is a value of the CIF; otherwise $n_{CI} = 0$. $N_{CCE,p}$ is a number of the CCEs in the CORESET $p$ configured for the UE by high layer signaling. $M_{s,max}^{(L)}$ is a maximum number of candidate PDCCHs at the AL L of a Search Space set s configured of all serving cells. That is, $M_{s,max}^{(L)}$ represents a maximum value of all $M_{s,n_{CI}}^{(L)}$. $m_{s,n_{CI}} = 0, \cdots, M_{s,n_{CI}}^{(L)} - 1$, and $M_{s,n_{CI}}^{(L)}$ is a number of candidate PDCCHs that the UE needs to perform the blind detection at the AL L of the Search Space set s on the serving cell $n_{CI}$. That is, $M_{s,n_{CI}}^{(L)}$ represents the number of candidate control channels at the AL L of the SS set s on the serving cell $n_{CI}$.

Exemplarily, assuming that L=4, $N_{CCE,p}$ =24, a CCE index of the candidate PDCCH may be a combination of {0,1,2,3}, {4,5,6,7}, {8,9,10,11}, {12,13,14,15}, {16,17,18,19} and {20,21,22,23}.

By sending contents of one PDCCH through multiple TRPs, reliability of PDCCH transmission can be improved and robustness of the PDCCH can be increased.

In this case, how to transmit the PDCCH by using multiple TRPs is an urgent problem to be solved at present, such as how a network side performs the transmission, how a UE side performs combining, and how the UE side knows which PDCCHs should be combined.

Based on this, in some embodiments of the present disclosure, at least two candidate control channels are sent. There is a first corresponding link between information related to a first candidate control channel of the at least two candidate control channels and information related to other candidate control channels of the at least two candidate control channels except for the first candidate control channel.

In the embodiments of the present disclosure, since the link is established between multiple candidate control channels, the UE side can be aware of which candidate control channels should be combined, so that a PDCCH can be sent by using multiple TRPs.

Embodiments of the present disclosure provide a control channel transmission method, which is applied to a network device (e.g. a base station). The method includes the following operation.

At least two candidate control channels are sent. There is a first corresponding link between information related to a first candidate control channel of the at least two candidate control channels and information related to other candidate control channels of the at least two candidate control channels except for the first candidate control channel.

Specifically, in practical application, the candidate control channel can be a candidate PDCCH.

Each TRP corresponds to one candidate control channel, so that a control channel can be through at least two TRPs.

The at least two candidate control channels are associated. Specifically, the association refers to that contents of the at least two candidate control channels are associated.

Specifically, contents of the at least two candidate control channels may be the same. That is, the contents of the at least two candidate control channels are the same DCI. Exemplarily, assuming that first DCI needs repetition, the repetition of the first DCI is performed by using multiple TRPs, and at this time, contents of each of the at least two candidate control channels are the first DCI.

Here, in practical application, each of the at least two candidate control channels transmits part of a DCI. That is, the at least two candidate control channels constitute a same DCI.

Time-frequency domain resources of PDCCHs can be determined through CORESET and Search Space set. In addition, basic unit of the PDCCH is the CCE. Therefore, a first corresponding link can be established based on these three parameters.

In practical application, the CORESETs and the Search Space sets where the multiple candidate control channels are located may be the same or different, which may include the following specific cases.

A first case is that the at least two candidate control channels are in one Search Space set or one CORESET, which is not part of the present invention and is illustrated for illustration purpose. That is, associated contents are sent by using multiple TRPs in one Search Space set or one CORESET. For example, the same DCI is sent, or the same DCI is sent, or each TRP sends part of the contents of a DCI.

In this case, the first corresponding link may include a link between indexes of the other candidate control channels and an index of the first candidate control channel. Exemplarily, assuming that there are two candidate control channels, a candidate control channel pair can be established, and a candidate control channel with a candidate control channel index m and a candidate control channel with a candidate control channel index m+1 are sent at the same time. A UE jointly receives the candidate control channel with the candidate control channel index m+1 while receiving the candidate control channel with the candidate control channel index m, and performs soft combining processing on the two candidate PDCCHs. That is, the first corresponding link may be embodied as an offset between the indexes of the other candidate control channels and the index of the first candidate control channel. By establishing the link between the indexes of the other candidate control channels and the index of the first candidate control channel, the UE side can be aware of which candidate control channels should be combined, thereby improving the reliability of control channel reception.

In practical application, the maximum number of the candidate control channels (e.g. 8) can be configured through RRC signaling, so that the index of the first candidate control channel can be determined by the maximum number.

In practical application, the offset between the indexes of the other candidate control channels and the index of the first candidate control channel may be specified.

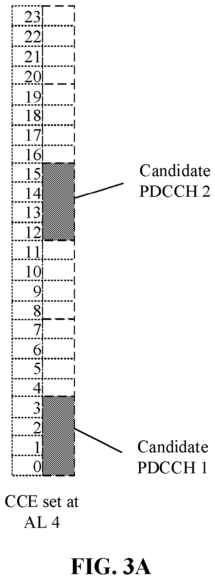

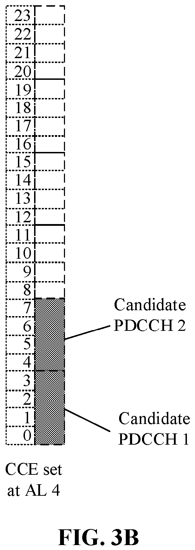

The first corresponding link may also include a link between CCE indexes of the other candidate control channels and a CCE index of the first candidate control channel. For example, assuming that there are two candidate control channels, which correspond to TRP1 and TRP2 respectively, a CCE index pair can be established, so that another CCE index can be determined at the same time according to a determined CCE index of one candidate control channel. The CCE index pair can be defined according to total numbers of the ALs and the CCEs (i.e. NCCE). Assuming that the AL is 4 and the NCCE is 24, TRP1 sends candidate PDCCH1 at CCE{0,1,2,3} (CCE with the indexes of 0, 1, 2 and 3, respectively), and TRP2 sends another candidate PDCCH2 at CCE{12,13,14,15} (CCE with the indexes of 12, 13, 14 and 15, respectively), as illustrated in FIG. 3A. At this time, the UE performs joint reception on the candidate PDCCHs carried by the 8 CCEs (i.e. the candidate control channel at the CCE{0,1,2,3} and the candidate control channel at the CCE{12,13,14,15}). That is, the UE performs combining reception. Cyclic Redundancy Check (CRC) is performed. The CCE index pair can also be defined according to the AL and a value such as 1. Assuming that the AL is 4 and the value is 1 (i.e. the offset is 1), the TRP1 sends the control channel at CCE{0,1,2,3} (CCE with the indexes of 0, 1, 2, 3, respectively) and TRP2 sends the control channel at CCE{4,5,6,7} (CCE with the indexes of 4, 5, 6, 7, respectively), as illustrated in FIG. 3B. That is, the first corresponding link may be embodied as an offset between the CCE indexes of the other candidate control channels and the CCE index of the first candidate control channel. In practical application, the offset between the CCE indexes of the other candidate control channels and the CCE index of the first candidate control channel may be specified, such as NCCE/2. By establishing the link between the CCE indexes of the other candidate control channels and the CCE index of the first candidate control channel, the UE side can be aware of which candidate control channels should be combined, thereby improving the reliability of control channel reception.

A second case is that the at least two candidate control channels are in different Search Space sets. That is, the multiple TRPs send the associated contents in different Search Space sets. For example, the same DCI is sent, or the same DCI is sent, or each TRP sends part of the contents of a DCI.

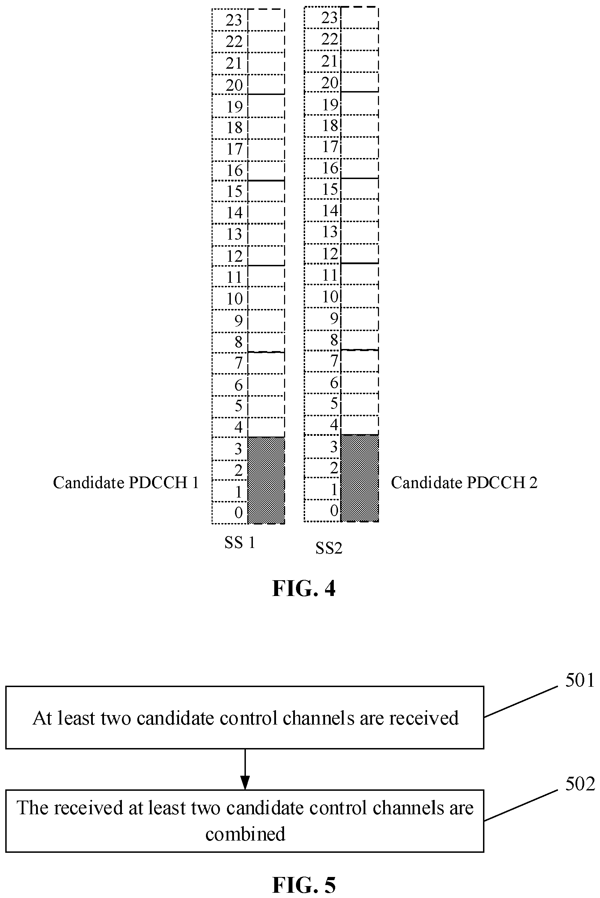

In this case, the first corresponding link includes a link between Search Space set indexes of the other candidate control channels and a Search Space set index of the first candidate control channel. Exemplarily, assuming that there are two candidate control channels, which correspond to TRP1 and TRP2 respectively, TRP1 sends candidate PDCCH1 at CCE{0,1,2,3} of Search Space set 1, and TRP2 sends candidate PDCCH2 at CCE{0,1,2,3} of Search Space set 2, as illustrated in FIG. 4. The ALs of the two candidate PDCCHs are the same, at this time, the UE performs joint reception on the candidate PDCCHs carried by the 8 CCEs (i.e. the PDCCH1 of CCE{0,1,2,3} and the PDCCH2 of CCE{0,1,2,3}). That is, combining reception is performed on the PDCCHs sent by the two TRPs, and the CRC is performed. By establishing the link between the Search Space set indexes of the other candidate control channels and the Search Space set index of the first candidate control channel, the UE side can be aware of which candidate control channels should be combined, thereby improving the reliability of control channel reception.

In the second case, the link between the indexes of the other candidate control channels and the index of the first candidate control channel may also be established.

Based on this, in an embodiment, the first corresponding link may also include the link between the indexes of the other candidate control channels and the index of the first candidate control channel.

Accordingly, in the second case, the link between the CCE indexes of the other candidate control channels and the CCE index of the first candidate control channel may also be established. Here, a CCE of the candidate control channel may also be referred to as a CCE where the candidate control channel is located.

Based on this, in an embodiment, the first corresponding link may also include the link between the CCE indexes of the other candidate control channels and the CCE index of the first candidate control channel.

Here, when the Search Space sets where the at least two candidate control channels are located correspond to one CORESET, at least two TCI states should be activated for the CORESET, so that the UE can be aware of the TCI states required for receiving the candidate control channel.

Based on this, in an embodiment, the method may further include the following operation.

First information is sent to the UE. The first information is configured to indicate a respective TCI state of each of the at least two candidate control channels.

Here, in practical application, the first information is sent to the UE through an MAC CE.

Exemplarily, assuming that there are two candidate control channels, two TCI states can be activated for the CORESET through the MAC CE. At this time, the UE needs to know a mapping relationship between the two TCI states and the two candidate control channels. For example, candidate control channel with a small CCE index maps a first TCI state indicated in the MAC CE, and candidate control channel with a large CCE index maps a second TCI state indicated in the MAC CE.

A third case is that the at least two candidate control channels are in different CORESETs, which is not part of the present invention and is illustrated for illustration purpose. That is, the multiple TRPs send the associated contents in different CORESETs. For example, the same DCI is sent, or each TRP sends part of the contents of a DCI.

In this case, the first corresponding link may include a link between CORESET indexes of the other candidate control channels and a CORESET index of the first candidate control channel.

Accordingly, the network device uses the CORESET index of the first candidate control channel and a first parameter to determine the CORESET indexes of the other candidate control channels. The first parameter represents an offset relative to the CORESET index of the first candidate control channel.

That is, the CORESET indexes of the other candidate control channels equal to a sum of the CORESET index of the first candidate control channel and the first parameter.

By establishing the link between the CORESET indexes of the other candidate control channels and the CORESET index of the first candidate control channel, the UE side can be aware of which candidate control channels should be combined, thereby improving the reliability of control channel reception. At the same time, different CORESETs have different TCI states. The at least two candidate control channels are located in different CORESETs, so that the TCI states of the at least two candidate control channels are different, thereby ensuring reception performance of the candidate control channels.

In the third case, the link between the Search Space set indexes of the other candidate control channels and the Search Space set index of the first candidate control channel may also be established.

Based on this, in an embodiment, the first corresponding link may also include the link between the Search Space set indexes of the other candidate control channels and the Search Space set index of the first candidate control channel.

Accordingly, the link between the indexes of the other candidate control channels and the index of the first candidate control channel may also be established.

Based on this, in an embodiment, the first corresponding link may also include the link between the indexes of the other candidate control channels and the index of the first candidate control channel.

Accordingly, in the second case, the link between the CCE indexes of the other candidate control channels and the CCE index of the first candidate control channel may also be established.

Based on this, in an embodiment, the first corresponding link may also include the link between the CCE indexes of the other candidate control channels and the CCE index of the first candidate control channel.

In the above three cases, when there is the link between the Search Space set indexes of the other candidate control channels and the Search Space set index of the first candidate control channel, the network device determines the Search Space set indexes of the other indexes of the other candidate control channels by using the Search Space set index of the first candidate control channel and a second parameter. The second parameter represents an offset relative to the Search Space set index of the first candidate control channel.

That is, the Search Space set indexes of the other candidate control channels equal to a sum of the Search Space set index of the first candidate control channel and the second parameter.

When there is the link between the indexes of the other candidate control channels and the index of the first candidate control channel, the network device determines the indexes of the other candidate control channels by using the index of the first candidate control channel and a third parameter. The third parameter represents an offset relative to the index of the first candidate control channel.

That is, the indexes of the other candidate control channel equal to a sum of the index of the first candidate control channel and the third parameter.

When there is the link between the CCE indexes of the other candidate control channels and the CCE index of the first candidate control channel, the CCE indexes of the other candidate control channels are determined by using the CCE index of the first candidate control channel and a fourth parameter. The fourth parameter represents an offset relative to the CCE index of the first candidate control channel.

That is, the CCE indexes of the other candidate control channel equal to a sum of the CCE index of the first candidate control channel and the fourth parameter.

In an embodiment, the CCE indexes of the at least two candidate control channels can be determined by the following equation.

$$ L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \mod \left\lfloor N_{CCE,p}/L \right\rfloor \right\} + i + C \tag{2} $$

L represents an AL. $i = 0, \cdots, L - 1$. For a common Search Space set, $Y_{p,n_{s,f}^{\mu}}$ is 0. For a specific Search Space set for UE, $Y_{p,n_{s,f}^{\mu}} = \left( A_p \cdot Y_{p,n_{s,f}^{\mu}-1} \right) \mod D$. If $p \mod 3 = 0$, $A_p$ is 39827. If $p \mod 3 = 1$, $A_p$ is 39829. If $p \mod 3 = 2$, $A_p$ is 39839, and D is 65537. $N_{CCE,p}$ represents a number of CCEs in a CORESET p. $n_{CI}$ represents a value of a CIF or fixed to 0. $M_{s,n_{CI}}^{(L)}$ represents a number of candidate control channels at the AL L of a Search Space set s on a serving cell $n_{CI}$. $M_{s,max}^{(L)}$ represents a maximum value of all $M_{s,n_{CI}}^{(L)}$. $m_{s,n_{CI}} = 0, \cdots, M_{s,n_{CI}}^{(L)} - 1$. C represents the fourth parameter.

As can be seen from the above description, for determination of the CCE index of the candidate control channel, compared with the equation (1), the fourth parameter is added to equation (2).

Here, when determining the CCE index of the candidate control channel by using the above equation, the value of C is 0 for the first candidate control channel.

Accordingly, embodiments of the present disclosure also provide a control channel transmission method, which is applied to a UE. As illustrated in FIG. 5, the method includes the following operations.

At block 501, at least two candidate control channels are received.

At block 502, the received at least two candidate control channels are combined.

There is a first corresponding link between information related to a first candidate control channel of the at least two candidate control channels and information related to other candidate control channels of the at least two candidate control channels except for the first candidate control channel.

When contents of the at least two candidate control channels are the same (e.g. when repetition of a control channel is performed), the UE receives each candidate control channel, performs CRC on each candidate control channel, and combines the contents of the candidate control channels after the CRC is passed. The specific processing procedure for combination is not limited in the embodiments of the present disclosure.

When the at least two candidate control channels constitute a same DCI, and when each of the at least two candidate control channels transmits part of a DCI, the UE receives the at least two candidate control channels at the same time. That is, the UE jointly receives these candidate control channels, and performs CRC so as to obtain the DCI.

Similar to the network device, the UE also needs to determine the information related to the other candidate control channels according to the information related to the first candidate control channel, and the specific processing procedure is the same as the processing procedure of the network device, which would not be elaborated here.

In an embodiment, the method may further include the following operation.

First information sent by a network side is received. The first information is configured to indicate a respective TCI state of each of the two candidate control channels.

In practical application, the first information sent by the network side is received through an MAC CE.

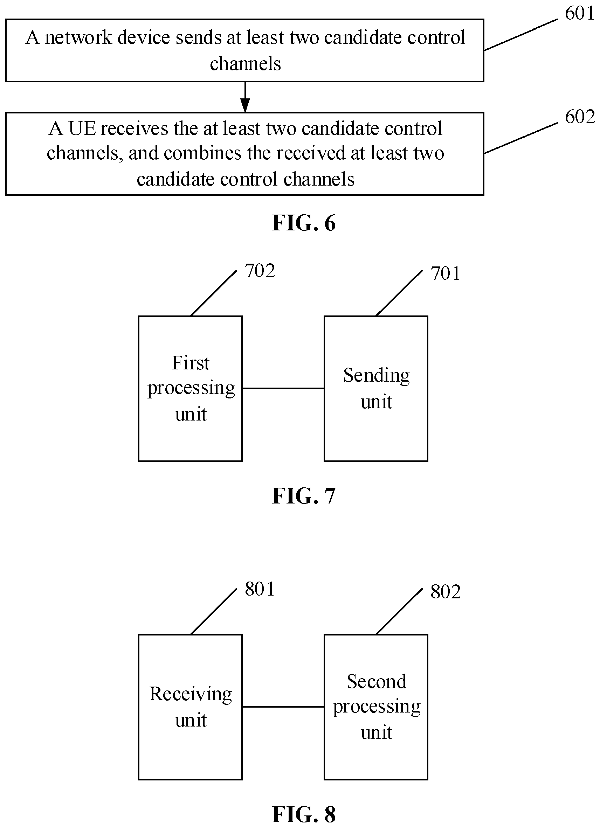

Embodiments of the present disclosure also provide a control channel transmission method, as illustrated in FIG. 6, which includes the following operations.

At block 601, a network device sends at least two candidate control channels. There is a first corresponding link between information related to a first candidate control channel of the at least two candidate control channels and information related to other candidate control channels of the at least two candidate control channels except for the first candidate control channel.

At block 602, a UE receives the at least two candidate control channels, and combines the received at least two candidate control channels.

It is to be noted that the specific processing procedures of the network device and the UE have been described in detail above, which would not be elaborated here.

According to the control channel transmission method provided by the embodiments of the present disclosure, the network device sends the at least two candidate control channels. There is a first corresponding link between information related to a first candidate control channel of the at least two candidate control channels and information related to other candidate control channels of the at least two candidate control channels except for the first candidate control channel. The UE receives the at least two candidate control channels. Since the link is established between multiple candidate control channels, the UE side can be aware of which candidate control channels should be combined, so that a PDCCH can be sent by using multiple TRPs.

In order to implement the method in the embodiments of the present disclosure, embodiments of the present disclosure also provide a control channel transmission apparatus, arranged on a network device. As illustrated in FIG. 7, the apparatus includes a sending unit 701.

The sending unit 701 is configured to send at least two candidate control channels. There is a first corresponding link between information related to a first candidate control channel of the at least two candidate control channels and information related to other candidate control channels of the at least two candidate control channels except for the first candidate control channel.

In an embodiment, as illustrated in FIG. 7, the apparatus may further include a first processing unit 702.

The first processing unit 702 is configured to determine CORESET indexes of the other candidate control channels by using a CORESET index of the first candidate control channel and a first parameter. The first parameter represents an offset relative to the CORESET index of the first candidate control channel.

In an embodiment, the first processing unit 702 is also configured to determine Search Space set indexes of the other candidate control channels by using a Search Space set index of the first candidate control channel and a second parameter. The second parameter represents an offset relative to the Search Space set index of the first candidate control channel.

In an embodiment, the first processing unit 702 is also configured to determine indexes of the other candidate control channels by using an index of the first candidate control channel and a third parameter. The third parameter represents an offset relative to the index of the first candidate control channel.

In an embodiment, the first processing unit 702 is also configured to determine CCE indexes of the other candidate control channels by using a CCE index of the first candidate control channel and a fourth parameter. The fourth parameter represents an offset relative to the CCE index of the first candidate control channel.

In an embodiment, the sending unit 701 is also configured to send first information to a UE. The first information is configured to indicate a respective TCI state of each of the at least two candidate control channels.

In an embodiment, the sending unit 701 is specifically configured to send the first information to the UE through an MAC CE.

In practical application, the sending unit 701 may be implemented through a communication interface in the control channel transmission apparatus. The first processing unit 702 may be implemented through a processor in the control channel transmission apparatus.

In order to implement the method on a UE side in the embodiments of the present disclosure, embodiments of the present disclosure also provide a control channel transmission apparatus, arranged on a UE. As illustrated in FIG. 8, the apparatus includes a receiving unit 801.

The receiving unit 801 is configured to receive at least two candidate control channels.

In an embodiment, as illustrated in FIG. 8, the apparatus may further include a second processing unit 802.

The second processing unit 802 is configured to combine the received at least two candidate control channels.

There is a first corresponding link between information related to a first candidate control channel of the at least two candidate control channels and information related to other candidate control channels of the at least two candidate control channels except for the first candidate control channel.

In an embodiment, the second processing unit 802 is configured to determine CORESET indexes of the other candidate control channels by using a CORESET index of the first candidate control channel and a first parameter. The first parameter represents an offset relative to the CORESET index of the first candidate control channel.

The second processing unit 802 is also configured to determine Search Space set indexes of the other candidate control channels by using a Search Space set index of the first candidate control channel and a second parameter. The second parameter represents an offset relative to the Search Space set index of the first candidate control channel.

In an embodiment, the second processing unit 802 is also configured to determine indexes of the other candidate control channels by using an index of the first candidate control channel and a third parameter. The third parameter represents an offset relative to the index of the first candidate control channel.

In an embodiment, the second processing unit 802 is also configured to determine CCE indexes of the other candidate control channels by using a CCE index of the first candidate control channel and a fourth parameter. The fourth parameter represents an offset relative to the CCE index of the first candidate control channel.

In an embodiment, the receiving unit 801 is also configured to receive first information sent by a network side. The first information is configured to indicate a respective TCI state of each of the at least two candidate control channels.

In an embodiment, the receiving unit 801 is configured to receive the first information sent by a network side through an MAC CE.

In practical application, the receiving unit 801 may be implemented through a communication interface in the control channel transmission apparatus. The second processing unit 802 may be implemented through a processor in the control channel transmission apparatus.

It is to be noted that when performing control channel transmission, the control channel transmission apparatuses provided by the above embodiments are only exemplified through a division of the above program modules. In practical application, the above processing may be implemented by different program modules as needed. That is, internal structure of the apparatus may be divided into different program modules to implement all or part of the above-described processing. In addition, the control channel transmission apparatuses and the control channel transmission methods provided by the above embodiments belong to the same concept, and the detailed implementation processes thereof are detailed in the method embodiments and would not be repeated here.

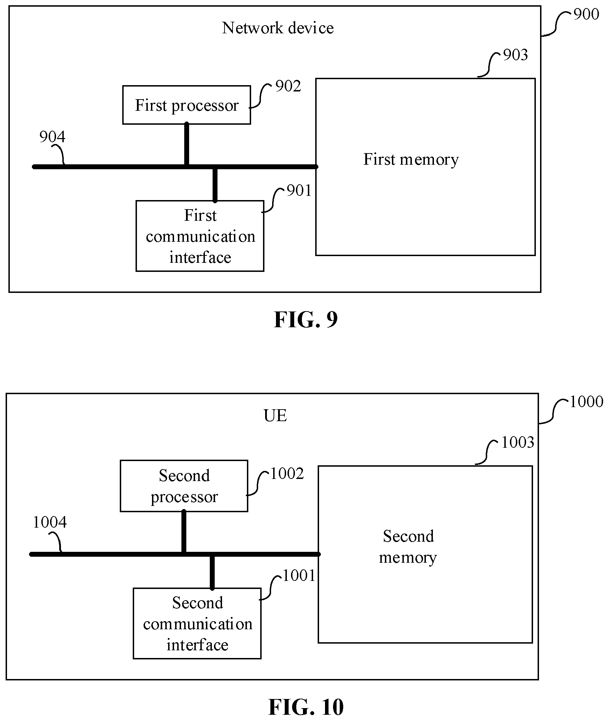

Based on the hardware implementation of the above program modules, and in order to implement the method on the network device side of the embodiments of the present disclosure, embodiments of the present disclosure further provide a network device. As illustrated in FIG. 9, the network device 900 includes a first communication interface 901 and a first processor 902.

The first communication interface 901 is configured to perform information exchange with a UE.

The first processor 902 is connected to the first communication interface 901 to implement information exchange with the UE, and is configured to execute the methods provided by one or more technical solutions on the network device side when running a computer program. The computer program is stored on a first memory 903.

Specifically, the first communication interface 901 is configured to send at least two candidate control channels. There is a first corresponding link between information related to a first candidate control channel of the at least two candidate control channels and information related to other candidate control channels of the at least two candidate control channels except for the first candidate control channel.

In an embodiment, the first processor 902 is configured to determine CORESET indexes of the other candidate control channels by using a CORESET index of the first candidate control channel and a first parameter. The first parameter represents an offset relative to the CORESET index of the first candidate control channel.

In an embodiment, the first processor 902 is also configured to determine Search Space set indexes of the other candidate control channels by using a Search Space set index of the first candidate control channel and a second parameter. The second parameter represents an offset relative to the Search Space set index of the first candidate control channel.

In an embodiment, the first processor 902 is also configured to determine indexes of the other candidate control channels by using an index of the first candidate control channel and a third parameter. The third parameter represents an offset relative to the index of the first candidate control channel.

In an embodiment, the first processor 902 is also configured to determine CCE indexes of the other candidate control channels by using a CCE index of the first candidate control channel and a fourth parameter. The fourth parameter represents an offset relative to the CCE index of the first candidate control channel.

In an embodiment, the first communication interface 901 is also configured to send first information to a UE. The first information is configured to indicate a respective TCI state of each of the at least two candidate control channels.

In an embodiment, the first communication interface 901 is configured to send the first information to the UE through an MAC CE.

It is to be noted that the specific processing procedures of the first processor 902 and the first communication interface 901 may be understood with reference to the methods described above.

In practical application, various components in the network device 900 may be coupled together through a bus system 904. It should be understood that the bus system 904 is configured to implement connection communication between these components. In addition to a data bus, the bus system 904 may further include a power bus, a control bus and a status signal bus. However, for clarity of illustration, the various buses are marked as the bus system 904 in FIG. 9.

The first memory 903 in the embodiments of the present disclosure is configured to store various types of data to support the operations of the network device 900. Examples of the data may include any computer program executable on the network device 900.

The methods disclosed in the above embodiments of the present disclosure may be applied to the first processor 902 or implemented by the first processor 902. The first processor 902 may be an integrated circuit chip with signal processing capabilities. In an implementation process, various operations of the methods may be completed by an integrated logical circuit of hardware or an instruction in a software form in the first processor 902. The first processor 902 described above may be a general-purpose processor, a Digital Signal Processor (DSP), or other programmable logic devices, discrete gates or transistor logic devices, discrete hardware components, etc. Various methods, operations and logic block diagrams disclosed in the embodiments of the present disclosure may be implemented or executed by the first processor 902. The general-purpose processor may be a microprocessor or any conventional processor, etc. The operations of the methods disclosed in combination with the embodiments of the present disclosure may be directly embodied by a hardware decoding processor, or may be embodied by a combination of hardware and software modules in the decoding processor. The software modules may be located in a storage medium, which is located in the first memory 903. The first processor 902 may read information in the first memory 903, and completes the operations of the foregoing methods in combination with the hardware.

In an exemplary embodiment, the network device 900 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic components, and is configured to execute the foregoing methods.

Based on the hardware implementation of the above program modules, and in order to implement the method on the UE device side of the embodiments of the present disclosure. As illustrated in FIG. 10, the UE 1000 includes a second communication interface 1001 and a second processor 1002.

The second communication interface 1001 is configured to perform information exchange with a network device.

The second processor 1002 is connected to the second communication interface 1001 to implement information exchange with the network device, and is configured to execute the methods provided by one or more technical solutions on the UE side when running a computer program. The computer program is stored on a second memory 1003.

Specifically, the second communication interface 1001 is configured to receive at least two candidate control channels.

In an embodiment, the second processor 1002 is configured to combine the received at least two candidate control channels.

There is a first corresponding link between information related to a first candidate control channel of the at least two candidate control channels and information related to other candidate control channels of the at least two candidate control channels except for the first candidate control channel.

In an embodiment, the second processor 1002 is also configured to determine CORESET indexes of the other candidate control channels by using a CORESET index of the first candidate control channel and a first parameter. The first parameter represents an offset relative to the CORESET index of the first candidate control channel.

The second processor 1002 is also configured to determine Search Space set indexes of the other candidate control channels by using a Search Space set index of the first candidate control channel and a second parameter. The second parameter represents an offset relative to the Search Space set index of the first candidate control channel.

In an embodiment, the second processor 1002 is also configured to determine indexes of the other candidate control channels by using an index of the first candidate control channel and a third parameter. The third parameter represents an offset relative to the index of the first candidate control channel.

In an embodiment, the second processor 1002 is also configured to determine CCE indexes of the other candidate control channels by using a CCE index of the first candidate control channel and a fourth parameter. The fourth parameter represents an offset relative to the CCE index of the first candidate control channel.

In an embodiment, the second communication interface 1001 is also configured to receive first information sent by a UE side. The first information is configured to indicate a respective TCI state of each of the at least two candidate control channels.

In an embodiment, the second communication interface 1001 is configured to receive the first information sent by a network side through an MAC CE.

It is to be noted that the specific processing procedures of the second communication interface 1001 and the second processor 1002 may be understood with reference to the methods described above.

Of course, in practical application, various components in the UE 1000 may be coupled together through a bus system 1004. It should be understood that the bus system 1004 is configured to implement connection communication between these components. In addition to the data bus, the bus system 1004 may further include a power bus, a control bus and a status signal bus. However, for clarity of illustration, the various buses are marked as the bus system 1004 in FIG. 10.

The second memory 1003 in the embodiments of the present disclosure is configured to store various types of data to support the operations of the UE 1000. Examples of the data may include any computer program executable on the UE 1000.

The methods disclosed in the above embodiments of the present disclosure may be applied to the second processor 1002 or implemented by the second processor 1002. The second processor 1002 may be an integrated circuit chip with signal processing capabilities. In an implementation process, various operations of the method may be completed by an integrated logical circuit of hardware or an instruction in a software form in the second processor 1002. The second processor 1002 described above may be a general-purpose processor, a DSP, or other programmable logic devices, discrete gates or transistor logic devices, discrete hardware components, etc. Various methods, operations, and logic block diagrams disclosed in the embodiments of the present disclosure may be implemented or executed by the second processor 1002. The general-purpose processor may be a microprocessor or any conventional processor, etc. The operations of the methods disclosed in combination with the embodiments of the present disclosure may be directly embodied by a hardware decoding processor, or may be embodied by a combination of hardware and software modules in the decoding processor. The software module may be located in a storage medium, which is located in the second memory 1003. The second processor 1002 may read information in the second memory 1003, and completes the operations of the foregoing methods in combination with the hardware.

In an exemplary embodiment, the UE 1000 may be implemented by one or more ASICs, DSPs, PLDs, CPLDs, FPGAs, general purpose processors, controllers, MCUs, microprocessors, or other electronic components, and is configured to execute the foregoing method.

It should be understood that the memories (the first memory 903 and the second memory 1003) in the embodiments of the present disclosure may be volatile memories or nonvolatile memories, and may also include both volatile and nonvolatile memories. The non-volatile memory may be a Read-Only Memory (ROM), a Programmable ROM (PROM), an Erasable PROM (EPROM), an Electrically EPROM (EEPROM), a Ferromagnetic Random Access Memory (FRAM), a Flash Memory, a magnetic surface memory, an optical disk or a Compact Disc-ROM (CD-ROM). The magnetic surface memory may be a magnetic disk memory or a magnetic tape memory. The volatile memory may be a Random Access Memory (RAM), which is used as an external cache. By way of example rather than limitation, RAMs in various forms may be adopted, such as a Static RAM (SRAM), a Synchronous SRAM (SSRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DRRAM). The memories described in the embodiments of the present disclosure are intended to include, but not be limited to, these and any other suitable types of memories.

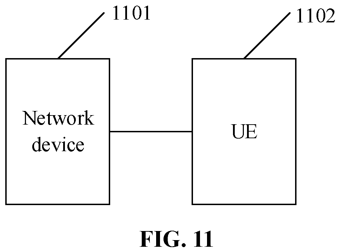

In order to implement the methods of the embodiments of the present application, embodiments of the present disclosure also provide a control channel transmission system. As illustrated in FIG. 11, the system includes a network device 1101 and a UE 1102.

It is to be noted that the specific processing procedures of the network device 1101 and the UE 1102 have been described in detail above, and would not be elaborated here.

In the exemplary embodiments, embodiments of the present disclosure also provide a storage medium. That is, a computer storage medium is provided, which is specifically a computer readable storage medium. For example, the computer storage medium may include a first memory 903 having stored a computer program that can be executable by a first processor 902 of a network device 900 to perform the operations of the above methods on a network device side. For another example, the computer readable storage medium may include a second memory 1003 having stored a computer program that can be executable by a second processor 1002 of a UE 1000 to perform the operations of the above methods on a UE side. The computer readable storage medium may be the memory such as the FRAM, the ROM, the PROM, the EPROM, the EEPROM, the Flash Memory, the magnetic surface memory, the optical disk, or the CD-ROM.

It is to be noted that the terms "first", "second" and the like are used to distinguish similar objects, and are not intended to describe a specific order or sequence.

In addition, the technical solutions described in the embodiments of the present disclosure may be arbitrarily combined without conflict.

The above are only the preferred embodiments of the present application and are not intended to limit the scope of protection of the present application.

**Claims**

1. A control channel transmission method, applied at a network device side, comprising:

sending (601), by at least two Transmission and Reception Points, TRPs, at least two candidate control channels, wherein there is a first corresponding link between information related to a first candidate control channel of the at least two candidate control channels and information related to other candidate control channels of the at least two candidate control channels except for the first candidate control channel,

wherein the at least two candidate control channels are candidate Physical Downlink Control Channels, PDCCHs,

wherein the at least two candidate control channels are in different Search Space sets, and the method is **characterized in that** the first corresponding link comprises a link between Search Space set indexes of the other candidate control channels and a Search Space set index of the first candidate control channel.

2. The method of claim 1, wherein contents of the at least two candidate control channels are the same; or the at least two candidate control channels constitute a same Downlink Control Information, DCI.

3. The method of claim 1, wherein the first corresponding link further comprises a link between indexes of the other candidate control channels and an index of the first candidate control channel.

4. The method of claim 1, wherein the first corresponding link further comprises a link between Control Channel Element, CCE, indexes of the other candidate control channels and a CCE index of the first candidate control channel.

5. The method of claim 1, wherein the Search Space set indexes of the other candidate control channels are determined by using the Search Space set index of the first candidate control channel and a second parameter, and the second parameter represents an offset relative to the Search Space set index of the first candidate control channel.

6. A control channel transmission method, applied at a User Equipment, UE, side, comprising:

receiving (501) at least two candidate control channels from at least two Transmission and Reception Points, TRPs,

wherein there is a first corresponding link between information related to a first candidate control channel of the at least two candidate control channels and information related to other candidate control channels of the at least two candidate control channels except for the first candidate control channel,

wherein the at least two candidate control channels are candidate Physical Downlink Control Channels, PDCCHs,

wherein the at least two candidate control channels are in different Search Space sets, and the method is **characterized in that** the first corresponding link comprises a link between Search Space set indexes of the other candidate control channels and a Search Space set index of the first candidate control channel.

7. The method of claim 6, wherein contents of the at least two candidate control channels are the same; or the at least two candidate control channels constitute a same Downlink Control Information, DCI.

8. The method of claim 6, wherein the first corresponding link further comprises a link between indexes of the other candidate control channels and an index of the first candidate control channel.

9. The method of claim 6, wherein the first corresponding link further comprises a link between Control Channel Element, CCE, indexes of the other candidate control channels and a CCE index of the first candidate control channel.

10. The method of claim 6, wherein the Search Space set indexes of the other candidate control channels are determined by using the Search Space set index of the first candidate control channel and a second parameter, and the second parameter represents an offset relative to the Search Space set index of the first candidate control channel.

11. A network device, comprising:

a first processor (902); and
a first memory (903) configured to store a computer program executable on the processor,
wherein the first processor is configured to implement the method of any one of claims 1 to 5 when running the computer program.

12. A User Equipment ,UE, comprising:

a second processor (1002); and
a second memory (1003) configured to store a computer program executable on the processor,
wherein the second processor is configured to implement the method of any one of claims 6 to 10 when running
the computer program.

**13.** A storage medium, having stored thereon a computer program that when executed by a processor, implements the method of any one of claims 1 to 5.

**14.** A storage medium, having stored thereon a computer program that when executed by a processor, implements the method of any one of claims 6 to 10.

**Patentansprüche**

**1.** Steuerkanalübertragungsverfahren, das an einer Netzwerkvorrichtungsseite angewendet wird, umfassend:

Senden (601), durch mindestens zwei Übertragungs- und Empfangspunkte, TRPs, von mindestens zwei in Frage kommenden Steuerkanälen, wobei eine erste entsprechende Verknüpfung zwischen Informationen bezüglich eines ersten in Frage kommenden Steuerkanals der mindestens zwei in Frage kommenden Steuerkanäle und Informationen bezüglich anderer in Frage kommender Steuerkanäle der mindestens zwei in Frage kommenden Steuerkanäle mit Ausnahme des ersten in Frage kommenden Steuerkanals besteht, wobei die mindestens zwei in Frage kommenden Steuerkanäle in Frage kommende physikalische Downlink- Steuerkanäle, PDCCHs, sind, wobei die mindestens zwei in Frage kommenden Steuerkanäle in unterschiedlichen Suchraumsätzen sind und das Verfahren

**dadurch gekennzeichnet ist, dass** die erste entsprechende Verknüpfung eine Verknüpfung zwischen Suchraumsatzindizes der anderen in Frage kommenden Steuerkanäle und einem Suchraumsatzindex des ersten in Frage kommenden Steuerkanals umfasst.

**2.** Verfahren nach Anspruch 1, wobei Inhalte der mindestens zwei in Frage kommenden Steuerkanäle gleich sind; oder die mindestens zwei in Frage kommenden Steuerkanäle eine gleiche Downlink-Steuerinformation, DCI, bilden.

**3.** Verfahren nach Anspruch 1, wobei die erste entsprechende Verknüpfung ferner eine Verknüpfung zwischen Indizes der anderen in Frage kommenden Steuerkanäle und einem Index des ersten in Frage kommenden Steuerkanals umfasst.

**4.** Verfahren nach Anspruch 1, wobei die erste entsprechende Verknüpfung ferner eine Verknüpfung zwischen Steuerkanalelementindizes, CCE-Indizes, der anderen in Frage kommenden Steuerkanäle und einem CCE-Index des ersten in Frage kommenden Steuerkanals umfasst.

**5.** Verfahren nach Anspruch 1, wobei die Suchraumsatzindizes der anderen in Frage kommenden Steuerkanäle durch Verwenden des Suchraumsatzindexes des ersten in Frage kommenden Steuerkanals und eines zweiten Parameters bestimmt werden, und der zweite Parameter einen Versatz relativ zu dem Suchraumsatzindex des ersten in Frage kommenden Steuerkanals darstellt.

**6.** Steuerkanalübertragungsverfahren, das auf eine Benutzerausrüstung, UE, angewendet wird, umfassend:

Empfangen (501) von mindestens zwei in Frage kommenden Steuerkanälen von mindestens zwei Übertragungs- und Empfangspunkten, TRPs, wobei eine erste entsprechende Verknüpfung zwischen Informationen bezüglich eines ersten Kandidatensteuerkanals der mindestens zwei Kandidatensteuerkanäle und Informationen bezüglich anderer Kandidatensteuerkanäle der mindestens zwei Kandidatensteuerkanäle mit Ausnahme des ersten Kandidatensteuerkanals besteht, wobei die mindestens zwei in Frage kommenden Steuerkanäle in Frage kommende physikalische Downlink- Steuerkanäle, PDCCHs, sind, wobei die mindestens zwei in Frage kommenden Steuerkanäle in unterschiedlichen Suchraumsätzen sind und das Verfahren

**dadurch gekennzeichnet ist, dass** die erste entsprechende Verknüpfung eine Verknüpfung zwischen Suchraumsatzindizes der anderen in Frage kommenden Steuerkanäle und einem Suchraumsatzindex des ersten in Frage kommenden Steuerkanals umfasst.

7. Verfahren nach Anspruch 6, wobei die Inhalte der mindestens zwei in Frage kommenden Steuerkanäle gleich sind; oder
die mindestens zwei in Frage kommenden Steuerkanäle eine gleiche Downlink-Steuerinformation, DCI, bilden.

8. Verfahren nach Anspruch 6, wobei die erste entsprechende Verknüpfung ferner eine Verknüpfung zwischen Indizes der anderen in Frage kommenden Steuerkanäle und einem Index des ersten in Frage kommenden Steuerkanals umfasst.

9. Verfahren nach Anspruch 6, wobei die erste entsprechende Verbindung ferner eine Verbindung zwischen Steuerkanalelementindizes, CCE-Indizes, der anderen in Frage kommenden Steuerkanäle und einem CCE-Index des ersten in Frage kommenden Steuerkanals umfasst.

10. Verfahren nach Anspruch 6, wobei die Suchraumsatzindizes der anderen in Frage kommenden Steuerkanäle durch Verwenden des Suchraumsatzindexes des ersten in Frage kommenden Steuerkanals und eines zweiten Parameters bestimmt werden, und der zweite Parameter einen Versatz relativ zu dem Suchraumsatzindex des ersten in Frage kommenden Steuerkanals darstellt.

11. Netzwerkvorrichtung, umfassend:

einen ersten Prozessor (902); und
einen ersten Speicher (903), der konfiguriert ist, um ein Computerprogramm zu speichern, das auf dem Prozessor ausführbar ist,
wobei der erste Prozessor konfiguriert ist, um das Verfahren nach einem der Ansprüche 1 bis 5 zu implementieren, wenn das Computerprogramm abläuft.

12. Benutzerausrüstung, UE, umfassend:

einen zweiten Prozessor (1002); und
einen zweiten Speicher (1003), der konfiguriert ist, um ein Computerprogramm zu speichern, das auf dem Prozessor ausführbar ist,
wobei der zweite Prozessor konfiguriert ist, um das Verfahren nach einem der Ansprüche 6 bis 10 zu implementieren, wenn das Computerprogramm abläuft.

13. Speicherungsmedium, das ein Computerprogramm darauf gespeichert aufweist, das, wenn es durch einen Prozessor ausgeführt wird, das Verfahren nach einem der Ansprüche 1 bis 5 implementiert.

14. Speicherungsmedium, das ein Computerprogramm darauf gespeichert aufweist, das, wenn es durch einen Prozessor ausgeführt wird, das Verfahren nach einem der Ansprüche 6 bis 10 implementiert.


**Revendications**

1. Procédé de transmission de canal de commande, appliqué côté dispositif réseau, comprenant :

l'envoi (601), par au moins deux points de transmission et de réception, TRPs, d'au moins deux canaux de commande candidats, dans lequel il existe un premier lien de correspondance entre des informations relatives à un premier canal de commande candidat des au moins deux canaux de commande candidats et des informations relatives à d'autres canaux de commande candidats des au moins deux canaux de commande candidats, à l'exception du premier canal de commande candidat,
dans lequel les au moins deux canaux de commande candidats sont des canaux de commande de liaison descendante physique, PDCCHs, candidats,
les au moins deux canaux de commande candidats étant dans des ensembles d'espaces de recherche différents, et le procédé est

**caractérisé en ce que** le premier lien correspondant comprend un lien entre les index d'ensemble d'espaces de recherche des autres canaux de commande candidats et un index d'ensemble d'espaces de recherche du premier canal de commande candidat.

2. Procédé selon la revendication 1, dans lequel des contenus des au moins deux canaux de commande candidats sont identiques ; ou
les au moins deux canaux de commande candidats constituent des informations de commande de liaison descendante, DCI, identiques.

3. Procédé selon la revendication 1, dans lequel le premier lien correspondant comprend en outre un lien entre les index des autres canaux de commande candidats et un index du premier canal de commande candidat.

4. Procédé selon la revendication 1, dans lequel le premier lien correspondant comprend en outre un lien entre les index d'élément de canal de commande, CCE, des autres canaux de commande candidats et un index CCE du premier canal de commande candidat.

5. Procédé selon la revendication 1, dans lequel les index d'ensemble d'espaces de recherche des autres canaux de commande candidats sont déterminés en utilisant l'index d'ensemble d'espaces de recherche du premier canal de commande candidat et un second paramètre, et le second paramètre représente un décalage par rapport à l'index d'ensemble d'espaces de recherche du premier canal de commande candidat.

6. Procédé de transmission de canal de commande, appliqué coté équipement utilisateur, UE, comprenant :

la réception (501) d'au moins deux canaux de commande candidats provenant d'au moins deux points de transmission et de réception, TRPs,
dans lequel il existe un premier lien correspondant entre les informations relatives à un premier canal de commande candidat des au moins deux canaux de commande candidats et les informations relatives à d'autres canaux de commande candidats des au moins deux canaux de commande candidats à l'exception du premier canal de commande candidat,
dans lequel les au moins deux canaux de commande candidats sont des canaux de commande de liaison descendante physique, PDCCHs, candidats,
les au moins deux canaux de commande candidats étant dans des ensembles d'espaces de recherche différents, et le procédé est

**caractérisé en ce que** le premier lien correspondant comprend un lien entre les index d'ensemble d'espaces de recherche des autres canaux de commande candidats et un index d'ensemble d'espaces de recherche du premier canal de commande candidat.

7. Procédé selon la revendication 6, dans lequel les contenus des au moins deux canaux de commande candidats sont identiques ; ou
les au moins deux canaux de commande candidats constituent des informations de commande de liaison descendante, DCI, identiques.

8. Procédé selon la revendication 6, dans lequel le premier lien correspondant comprend en outre un lien entre les index des autres canaux de commande candidats et un index du premier canal de commande candidat.

9. Procédé selon la revendication 6, dans lequel le premier lien correspondant comprend en outre un lien entre les index d'élément de canal de commande, CCE, des autres canaux de commande candidats et un index CCE du premier canal de commande candidat.

10. Procédé selon la revendication 6, dans lequel les index d'ensemble d'espaces de recherche des autres canaux de commande candidats sont déterminés en utilisant l'index d'ensemble d'espaces de recherche du premier canal de commande candidat et un second paramètre, et le second paramètre représente un décalage par rapport à l'index d'ensemble d'espaces de recherche du premier canal de commande candidat.

11. Dispositif de réseau, comprenant :

un premier processeur (902) ; et

une première mémoire (903) configurée pour stocker un programme informatique exécutable sur le processeur, dans lequel le premier processeur est configuré pour implémenter le procédé selon l'une quelconque des revendications 1 à 5 lors de la mise en œuvre du programme informatique.

12. Équipement utilisateur, UE, comprenant :

un second processeur (1002) ; et
une seconde mémoire (1003) configurée pour stocker un programme informatique exécutable sur le processeur, dans lequel le second processeur est configuré pour implémenter le procédé selon l'une quelconque des revendications 6 à 10 lors de la mise en œuvre du programme informatique.

13. Support de stockage, sur lequel est stocké un programme informatique qui, lorsqu'il est exécuté par un processeur, implémente le procédé selon l'une quelconque des revendications 1 à 5.

14. Support de stockage, sur lequel est stocké un programme informatique qui, lorsqu'il est exécuté par un processeur, implémente le procédé selon l'une quelconque des revendications 6 à 10.

FIG. 1

| CCEs in the CORESET | CCE set at AL 1 | CCE set at AL 2 | CCE set at AL 4 | CCE set at AL 8 |

Candidate PDCCH

FIG. 2

| | |
|---|---|
| 23 | |
| 22 | |
| 21 | |
| 20 | |
| 19 | |
| 18 | |
| 17 | |
| 16 | |
| 15 | |
| 14 | Candidate PDCCH 2 |
| 13 | |
| 12 | |
| 11 | |
| 10 | |
| 9 | |
| 8 | |
| 7 | |
| 6 | |
| 5 | |
| 4 | |
| 3 | |
| 2 | Candidate PDCCH 1 |
| 1 | |
| 0 | |

CCE set at
AL 4

**FIG. 3A**

CCE set
at AL 4

**FIG. 3B**

Candidate PDCCH 1

SS 1

Candidate PDCCH 2

SS2

**FIG. 4**

---

At least two candidate control channels are received — 501

↓

The received at least two candidate control channels are combined — 502

**FIG. 5**

601

A network device sends at least two candidate control channels

602

A UE receives the at least two candidate control channels, and combines the received at least two candidate control channels

**FIG. 6**

702

First processing unit

701

Sending unit

**FIG. 7**

801

Receiving unit

802

Second processing unit

**FIG. 8**

**FIG. 9**

**FIG. 10**

1101

1102

| Network device | | UE |
|---|---|---|

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020021474 A1
- CN 110972283